# FASCICULE DE BREVET EUROPEEN

(11) **EP 1 224 110 B1**
(45) Date de publication et mention de la délivrance du brevet: **18.04.2007**
(21) Numéro de dépôt: 00967980.4
(22) Date de dépôt: 09.10.2000
(51) Int. Cl.: B62D 15/02, G01D 5/20

(54) **MODULE ELECTRONIQUE DE COLONNE DE DIRECTION**
ELEKTRONISCHES LENKSÄULENMODUL
ELECTRONIC STEERING COLUMN MODULE

(30) Priorité: 27.10.1999 FR 9913434; 27.10.1999 FR 9913437; 01.12.1999 FR 9915153
(43) Date de publication de la demande: 24.07.2002
(73) Titulaire: Siemens VDO Automotive S.A.S., 31036 Toulouse Cédex 01 (FR)
(72) Inventeur: DORDET, Yves, F-31470 Fonsorbes (FR); GENOT, Bernard, F-31590 St Marcel Paulel (FR); JANSSEUNE, Luc, F-31810 Venerque (FR)
(74) Mandataire: Berg, Peter
(86) Numéro de dépôt international: PCT/FR2000/002796
(87) Numéro de publication internationale: WO 2001/030637

(56) Documents cités:
- DE-A- 3 914 787
- US-A- 4 682 104
- US-A- 5 204 621

## Description

La présente invention est relative à un module de commande électronique pour véhicule automobile, et plus particulièrement à un tel module de commande adapté à être monté autour d'une colonne de direction de véhicule automobile, au dessous du volant, pour détecter et traiter des signaux de commande en réponse aux actions du conducteur.

On sait que la colonne de direction d'un véhicule automobile est couramment entourée d'un grand nombre de manettes de commandes (essuie-glaces, lumières, clignotants), dont la position doit être indépendamment enregistrée et traitée. De même, d'autres dispositifs tels que direction assistée ou systèmes d'amélioration de la stabilité du véhicule, ont besoin d'informations relatives à la position angulaire du volant de direction, ou au couple exercé sur ce dernier. On a donc tenté de regrouper la saisie et le traitement de ces informations dans un module électronique pour minimiser le nombre de pièces mises en jeu et le câblage du véhicule. On connaît par exemple du document DE 197 20 050 un module de ce type, constitué d'un boîtier comprenant un circuit imprimé sur lequel sont déposées des pistes résistives sur lesquelles se déplacent des curseurs reliés au volant ou aux manettes de commande. Cependant, ce module présente de nombreux inconvénients. Par exemple, si le curseur de détection de la position du volant est directement relié à celui-ci, la position du module doit être très précisément fixée par rapport à la colonne de direction, tant dans l'axe de celle-ci que latéralement, pour éviter que le curseur ne quitte la piste sur laquelle il circule. Si on interpose un dispositif entre le curseur et la colonne de direction pour élargir ces tolérances de positionnement, on augmente considérablement le coût du module et on détériore sa précision. De plus, le principe de contact entre un curseur et une piste résistive génère à terme des problèmes de fiabilité, en particulier pour la détection de la position de manettes de commande qui sont soumises à des niveaux de vibration importants en environnement automobile.

On connaît également du document US 4,682,104 un capteur de couple adapté au montage sur une colonne de direction faisant usage d'une technologie dite sans contact, utilisant les variations d'inductance mutuelle de multiples bobines portées par au moins quatre circuits imprimés dont la plupart sont mobiles. Outre la précision et la gamme de mesure réduites de ce capteur, sa complexité en rend le coût prohibitif. De plus, cette technologie ne permet pas la mesure de position angulaire absolue du volant. D'autres technologies de capteurs de position angulaire absolue sont connues, par exemple du document US 5,204,621. Cependant, elles utilisent des aimants cylindriques plats à aimantation radiale, bi- ou multipolaires, qui ne sont pas adaptés à un montage traversé par une colonne de direction.

La présente invention a donc pour but de proposer un module électronique de colonne de direction qui ne présente pas les inconvénients de la technique antérieure et permet d'obtenir une-meilleure fiabilité, à coût moindre tout en étant d'une mise en oeuvre facilitée par des tolérances de montage accrues. Pour cela on tire parti d'une nouvelle technologie de capteurs de position développée par la demanderesse, dont on trouvera une description complète dans les demandes de brevet français n° 2 800 457, 2 800 458, 2 800 459, 2 800 460 et 2 801 969 qui sont incorporées ici par référence.

On atteint ces buts de l'invention, ainsi que d'autres qui apparaîtront dans la suite de la présente description, au moyen d'un module électronique de colonne de direction pour véhicule automobile, comprenant un boîtier portant un circuit imprimé monté perpendiculairement à la colonne de direction et l'entourant complètement, et comportant des moyens de mesure de la position angulaire de ladite colonne caractérisé en ce que le circuit imprimé comprend au moins deux bobines spirales semi-circulaires disposées de manière concentrique au trou de passage de la colonne de direction, un anneau ferromagnétique en matériau à forte perméabilité magnétique et faible champ de saturation, placé en contact avec les bobines, l'ensemble coopérant avec un aimant semi-circulaire solidaire de la colonne de direction et placé en regard de l'anneau ferromagnétique.

Suivant une caractéristique de la présente invention, le circuit imprimé comprend quatre bobines spirales semi-circulaires disposées en deux groupes concentriques de deux bobines opposées, les groupes étant décalés de 90°.

Selon une autre caractéristique, l'anneau ferromagnétique (14) est maintenu en contact avec les bobines par serrage entre le circuit imprimé et le boîtier et l'aimant semi-circulaire est disposé à l'extérieur du boîtier. De façon avantageuse, le serrage est obtenu par rabattement sur le circuit imprimé d'un collet issu du boîtier.

Suivant une autre caractéristique de l'invention permettant la mesure du couple exercé sur le volant, le circuit imprimé comprend en outre au moins une bobine spirale circulaire concentrique aux précédentes, associée à un second anneau ferromagnétique coopérant avec une pluralité de secteurs aimantés régulièrement répartis en vis-à-vis à la périphérie de deux couronnes disposées de part et d'autre de la bobine et de l'anneau, chaque couronne étant respectivement solidaire d'une section de la colonne de direction, lesdites sections étant reliées par une barre de torsion traversant le module. Dans une forme d'exécution avantageuse, l'une des couronnes porte également l'aimant semi-circulaire.

Suivant une autre caractéristique du module selon l'invention, lorsque celui-ci est équipé de manettes de commande, le circuit imprimé comporte en outre une pluralité de détecteurs de position constitués d'au moins une bobine spirale de forme prédéterminée, associée avec une plaque ferromagnétique de forme correspondante en appui sur cette bobine, coopérant avec au moins un aimant mobile solidaire de la manette en vue de déterminer sa position. De ce fait, la manette de commande peut être montée sur le boîtier de telle sorte que l'aimant mobile soit à l'extérieur du boîtier par rapport au circuit imprimé.

D'autres caractéristiques et avantages du module suivant l'invention apparaîtront à la lecture de la description qui va suivre et à l'examen des dessins annexés dans lesquels:
- la figure 1 représente une vue schématique du module, sans son boîtier,
- la figure 2 représente une coupe partielle du module, selon l'axe A-A de la figure 1, dans un premier mode de réalisation,
- la figure 3 représente une coupe partielle du module au voisinage de la colonne de direction, dans un second mode de réalisation,
- la figure 4 représente une vue en perspective d'une couronne associée au module, dans sa version permettant la mesure du couple sur le volant,
- la figure 5 est une vue partielle du circuit imprimé du module, dans sa version permettant la mesure du couple sur le volant,
- la figure 6 représente une coupe partielle du module au voisinage de la colonne de direction, dans sa version permettant la mesure du couple sur le volant.

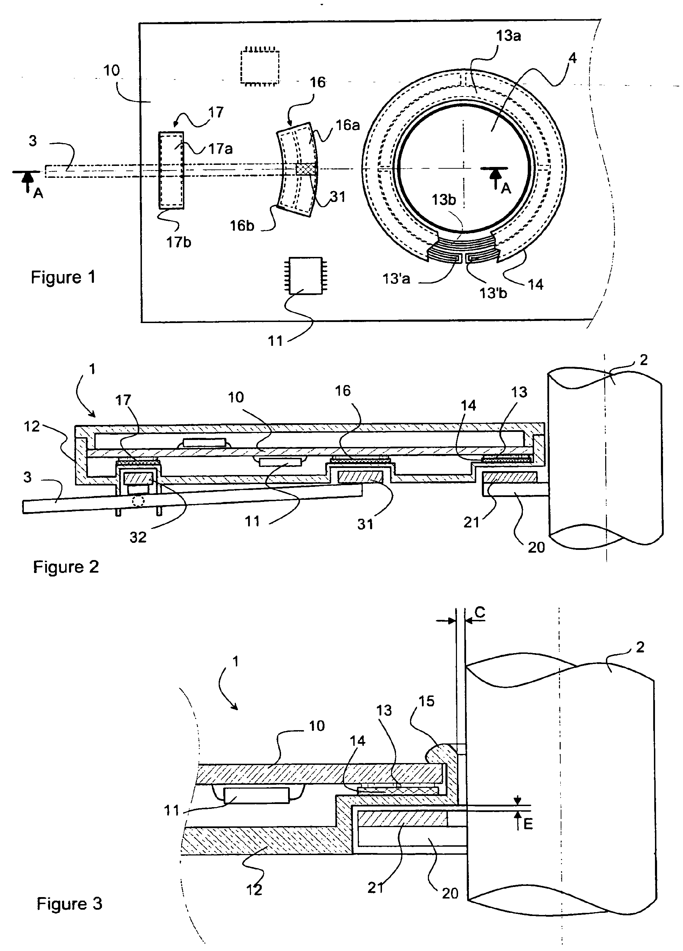

On se réfère aux figures 1 et 2 pour décrire le module électronique de colonne de direction globalement désigné par le repère 1 qui se compose d'un boîtier 12, en matière plastique de préférence, dans lequel est installé un circuit imprimé 10. Le boîtier 12 et le circuit imprimé 10 sont traversés par un trou de passage 4 destiné à laisser passer une colonne de direction 2 autour de laquelle le module 1 est placé, dans un plan sensiblement perpendiculaire à l'axe de la colonne de direction. Les pistes de cuivre du circuit imprimé 10 forment autour du trou de passage 4 une série de quatre bobines spirales 13a, 13b,13'a et 13'b. Ces bobines sont composées d'une dizaine de spires allongées selon une forme semi-circulaire, en demi anneau, s'étendant sur 180 degrés. On pourra trouver une description détaillée de ces bobines dans la demande de brevet français n°9913437 précitée. Elles sont disposées de manière à former, deux à deux, des anneaux concentriques au trou de passage 4. Dans l'exemple représenté à la figure 1, les bobines 13a et 13b sont disposées symétriquement selon un axe horizontal, opposées par leurs extrémités, pour former un premier anneau concentrique au trou de passage 4, au plus près de celui-ci. Le deuxième groupe de deux bobines 13'a et 13'b est disposé de manière similaire, selon un anneau concentrique au précédent, à l'extérieur de celui-ci. L'axe de symétrie du deuxième groupe est décalé de 90 degrés par rapport au précédent. Cette disposition des bobines permet comme on le verra par la suite, d'obtenir un capteur de position mesurant les déplacements angulaires de la colonne de direction 2 sur 360 degrés, et ce, moyennant un traitement approprié du signal, sans solution de continuité. Il est cependant à noter que, comme décrit dans la demande de brevet précitée, deux bobines 13a et 13'a, concentriques, s'étendant chacune sur 180 degrés et décalées de 90 degrés seraient suffisantes pour obtenir une mesure angulaire sur 360 degrés.

Les bobines, désignées maintenant sous le repère générique 13, sont placées en contact avec un anneau ferromagnétique 14, lui aussi concentrique au trou de passage 4, et dont la largeur est suffisante pour recouvrir avec un léger dépassement l'ensemble des bobines. Cet anneau ferromagnétique 14, d'une épaisseur de quelques dixièmes de millimètre, est constitué d'un matériau à forte perméabilité magnétique, de l'ordre de 100 000 fois celle de l'air, et à faible champ de saturation, par exemple de l'ordre de 0,8 Tesla. Quoique représenté partiellement brisé sur la figure 1 pour la clarté du dessin, il recouvre entièrement les bobines 13, servant ainsi de noyau ferromagnétique aux bobines dont il modifie l'impédance. L'anneau ferromagnétique 14 peut être réalisé par sérigraphie directe sur le circuit imprimé, mais sera préférentiellement obtenu par découpe dans une feuille de matériau approprié, par exemple du mumetal (alliage Nickel Fer) ou alliage nanocristallin à base de Cobalt (Permalloy, Ultraperm, etc.)

Cet anneau ferromagnétique peut être collé sur les bobines 13. Cependant, dans les modes d'assemblage du module 1 illustrés aux figures 2 et 3, il est simplement mis en contact avec les bobines et pressé contre elles par serrage entre le circuit imprimé 10 et la face interne du boîtier 12. Ce serrage peut être réalisé par le montage d'un couvercle du boîtier 12 (figure 2), effectué classiquement par vissage ou clipsage, en employant éventuellement des joints élastomères (non représentés) servant de ressorts entre le couvercle et le circuit imprimé. Dans le mode de montage préférentiel illustré à la figure 3, on se dispense même du couvercle en réalisant le serrage du circuit imprimé 10 sur le boîtier 12 par rabattement d'un collet cylindrique 15 issu du boîtier et délimitant le passage de la colonne de direction. Ce rabattement peut être effectué, de manière connue, par emploi de vibrations ultrasoniques ou par toute autre méthode connue en plasturgie.

L'anneau ferromagnétique 14 et les bobines 13 coopèrent avec un aimant semi-circulaire 21 porté par une couronne 20 solidaire de la colonne de direction 2. Cet aimant 21, d'un rayon et d'une largeur sensiblement égaux à ceux de l'anneau ferromagnétique 14, s'étend sur un arc de 180 degrés environ, en regard de la face du circuit imprimé 10 portant les bobines 13 et pressant l'anneau ferromagnétique 14, à l'extérieur du boîtier 12. L'étendue angulaire exacte et la polarité de l'aimant semi-circulaire 21 sont indifférentes, l'essentiel étant que le champ magnétique qu'il génère soit suffisant pour saturer la partie de l'anneau ferromagnétique 14 en regard de laquelle il est placé, sur 180 degrés. On comprend qu'alors l'impédance de chacune des bobines 13 est modifiée à proportion de la partie saturée de leur noyau ferromagnétique, laquelle varie en fonction de la position de l'aimant semi-circulaire, sur 360 degrés. Avantageusement, ces impédances peuvent être mesurées par des circuits électroniques connus en eux-mêmes, réalisables à partir de composants 11 portés par le circuit imprimé 10. De même, le traitement de ces mesures peut être exécuté directement sur le circuit imprimé 10 pour obtenir une mesure angulaire de la position de la colonne de direction, sous forme numérique, propre à être transmise à des dispositifs utilisateurs extérieurs au module 1, par exemple au moyen d'un bus de données multiplexées, On conçoit qu'ainsi, en regroupant la mesure et le traitement sur le circuit imprimé 10 qui porte le capteur lui-même, on limite le nombre de liaisons filaires au voisinage de la colonne de direction. D'autres avantages importants du module selon l'invention résident dans l'absence de liaison mécanique directe entre la colonne de direction et le module. En effet, l'influence s'exerçant par l'intermédiaire du champ magnétique de l'aimant 20, même au travers du boîtier plastique 12, on peut réaliser un module étanche, donc moins susceptible aux conditions d'environnement et plus fiable. De même, le module ne comporte aucune pièce mobile interne, et est donc de réalisation plus économique. En outre, les tolérances de montage du module autour de la colonne de direction, tant pour la coaxialité (notée C sur la figure 3) entre le trou de passage 4 et la colonne 2 que pour la position selon l'axe de cette dernière, qui conditionne l'entrefer (noté E) entre l'anneau ferromagnétique 14 et l'aimant 21, ne dépendent que de l'étendue du champ magnétique de celui-ci, qui peut s'étendre sur plusieurs millimètres. On obtient donc un module dont la mise en oeuvre sur le véhicule est grandement facilitée.

On retrouve ces avantages dans le cas où, comme on l'a montré sur les figures 1 et 2, le module de colonne de direction est équipé de manettes de commandes servant à commander des accessoires tels qu'essuie-glaces, clignotants, etc. en fonction de leur position. On a représenté une manette de commande 3, articulée de façon connue en soi sur le boîtier 12. Cette manette est équipée d'aimants 31 et 32, mobiles par rapport au boîtier 12. L'aimant 31 est solidaire de l'extrémité de la manette opposée à la partie manipulée par le conducteur, et se déplace selon un arc de cercle. L'aimant 32, situé au niveau de l'articulation de la manette sur le boîtier, se déplace linéairement en fonction de la rotation de la manette 3 sur son axe, par exemple au moyen d'un chariot mobile (non représenté). Les aimants mobiles 31 et 32 coopèrent respectivement avec des détecteurs de position 16 et 17 portés par le circuit imprimé 10 du module 1. Le détecteur d'extrémité 16 est constitué d'une (ou plusieurs) bobine spirale 16a gravée sur le circuit imprimé 10 et conformée en arc de cercle correspondant à l'aire balayée par l'aimant 31. Le détecteur 16 comporte en outre une plaque 16b de matériau ferromagnétique identique à celui de l'anneau 14, de forme correspondant à la forme de la bobine 16a. Cette plaque est montée en contact avec la bobine 16a de manière analogue au montage de l'anneau 14, par exemple par serrage entre le circuit imprimé 10 et le boîtier 12. Le détecteur linéaire 17 est réalisé de façon similaire avec une bobine 17a de forme rectangulaire correspondant à l'aire balayée par l'aimant 32 et une plaque ferromagnétique 17b de forme correspondante. Le fonctionnement de ces détecteurs est analogue au fonctionnement du capteur de position angulaire de la colonne de direction, la position de la manette 3 étant déduite de la mesure de l'impédance des bobines 16a et 17a, impédance qui varie en fonction de la saturation des plaques ferromagnétiques correspondantes par les aimants 31 et 32 liés à la manette 3. On notera cependant que la manette de commande 3 peut être montée de telle sorte que les aimants 31 et 32 soient situés à l'extérieur du boîtier 12, exerçant leur influence sur les détecteurs 16 et 17 au travers de la paroi du boîtier. Ceci peut permettre avantageusement de remplacer une manette brisée sans intervenir à l'intérieur du module 1.

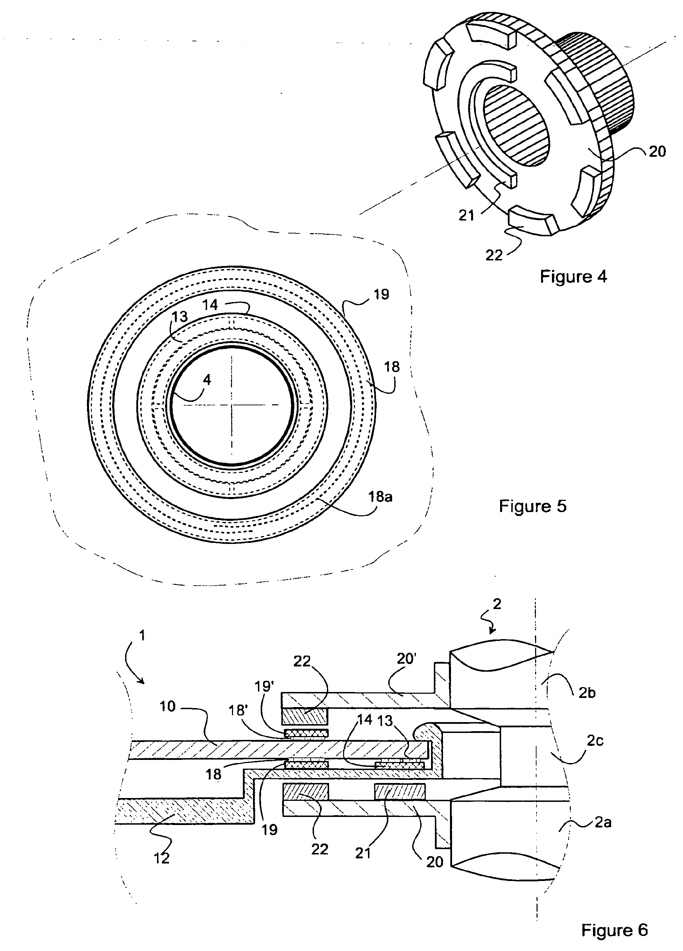

On va maintenant se référer aux figures 4, 5 et 6 pour détailler une autre caractéristique avantageuse du module selon l'invention, utilisée en particulier lorsque le véhicule est équipé d'une direction assistée par exemple électrique, nécessitant la mesure du couple exercé par le conducteur sur le volant de direction. Dans ce cas, le circuit imprimé 10 comporte au moins une bobine circulaire 18 supplémentaire (figure 5 et 6) réalisée sous forme d'une série de spires 18a d'axe commun confondu avec l'axe du trou de passage 4. On pourra trouver de plus amples détails sur la constitution de cette bobine dans la demande de brevet français n° 9915153 citée au début de la présente description. Cette bobine est concentrique au groupe des bobines 13 et de rayon tel que la distance entre les bobines soit supérieure à l'étendue du champ magnétique des aimants qui viendront en regard, comme on le verra par la suite, de manière à minimiser les perturbations induites par une bobine sur l'autre. La bobine 18 est recouverte par un anneau ferromagnétique 19 analogue à l'anneau 14 recouvrant les bobines 13, d'un diamètre et d'une largeur adaptés à la bobine 18. Comme on peut l'observer sur la figure 6, il est possible d'utiliser deux bobines 18 et 18' connectées en série et montées de part et d'autre du circuit imprimé 10, avec leur anneau ferromagnétique correspondant 19 et 19'. Dans ce cas, l'anneau 19 est maintenu par serrage entre le boîtier 12 et le circuit imprimé tandis que l'anneau 19' peut être collé sur celui-ci. La bobine circulaire 18 et son anneau ferromagnétique 19 (éventuellement aussi 18' et 19') coopèrent avec deux séries de secteurs aimantés 22, montés respectivement à la périphérie de deux couronnes 20 et 20' solidaires de la colonne de direction 2. La figure 4 représente une vue en perspective de la couronne 20, où l'on reconnaît l'aimant semi-circulaire 21 venant en regard des bobines 13 et de l'anneau 14. La couronne 20 possède un diamètre correspondant à celui de la bobine 18 et de l'anneau 19 et porte en périphérie six secteurs aimantés 22 s'étendant chacun sur un arc de 30 degrés et séparés par une distance angulaire équivalente. La couronne 20' est identique à la couronne 20 à l'exception de l'aimant semi-circulaire 21 qui y est absent. La couronne 20 est solidaire d'une première section 2a de la colonne de direction 2, et disposée de sorte que les secteurs aimantés 22 soient en regard de la bobine 18 et de l'anneau 19 d'un coté du circuit imprimé 10. La couronne 20' est montée symétriquement par rapport au plan du circuit imprimé et solidaire d'une deuxième section 2b de la colonne de direction. Les sections 2a et 2b de la colonne de direction sont reliées entre elles par une barre de torsion 2c représentée sur la figure 6 par une partie amincie de la colonne. Les couronnes 20 et 20' sont montées de sorte que la projection de leurs secteurs aimantés sur le plan du circuit imprimé 10 présente un recouvrement de 50% en l'absence de couple exercé sur la colonne de direction. De cette façon, 75% de la surface de l'anneau ferromagnétique 19 est saturée, définissant ainsi l'impédance de la bobine 18 en l'absence de couple exercé sur le volant. En présence d'un couple, la barre de torsion 2c introduit un décalage angulaire relatif entre les couronnes 20 et 20', conduisant pour un couple, dans un sens à une augmentation, et dans l'autre à une diminution de la surface saturée de l'anneau 19, variation mesurable par la variation consécutive de l'impédance de la bobine circulaire 18.

## Revendications

1. Module électronique de colonne de direction pour véhicule automobile, comprenant un boîtier (12) portant un circuit imprimé (10), monté perpendiculairement à la colonne de direction (2) et l'entourant complètement, et comportant des moyens de mesure de la position angulaire de ladite colonne **caractérisé en ce que** :
• le circuit imprimé comprend au moins quatre bobines spirales (13a, 13b, 13'a, 13'b) semi-circulaires disposées de manière concentrique au trou de passage (4) de la colonne de direction, en deux groupes concentriques de deux bobines opposées, les groupes étant décalés de 90°.
• un anneau ferromagnétique (14) en matériau à forte perméabilité magnétique et faible champ de saturation, placé en contact avec les bobines,
l'ensemble coopérant avec un aimant semi-circulaire (21) solidaire de la colonne de direction et placé en regard de l'anneau ferromagnétique (14).

2. Module selon la revendication 1, **caractérisé en ce que** l'anneau ferromagnétique (14) est maintenu en contact avec les bobines (13) par serrage entre le circuit imprimé (10) et le boîtier (12) et **en ce que** l'aimant semi-circulaire (21) est disposé à l'extérieur du boîtier.

3. Module selon la revendication 2, **caractérisé en ce que** le serrage est obtenu par rabattement sur le circuit imprimé d'un collet (15) issu du boîtier.

4. Module selon l'une des revendication 1 à 3, **caractérisé en ce que** le circuit imprimé comprend en outre au moins une bobine spirale circulaire (18) concentrique aux précédentes, associée à un second anneau ferromagnétique (19), coopérant avec une pluralité de secteurs aimantés (22) régulièrement répartis en vis-à-vis à la périphérie de deux couronnes (20, 20'), disposées de part et d'autre de la bobine (18) et de l'anneau (19), chaque couronne étant respectivement solidaire d'une section (2a, 2b) de la colonne de direction (2), lesdites sections étant reliées par une barre de torsion (2c) traversant le module.

5. Module selon la revendication 4, **caractérisé en ce que** l'une des couronnes (20) porte également l'aimant semi-circulaire (21).

6. Module selon l'une des revendication 1 à 5, combiné avec au moins une manette de commande (3) articulée sur le boîtier (12) du module, **caractérisé en ce que** le circuit imprimé comporte en outre une pluralité de détecteurs de position (16,17) constitués d'au moins une bobine spirale (16a, 17a) de forme prédéterminée, associée avec une plaque ferromagnétique (16b, 17b) de forme correspondante en appui sur ladite bobine, coopérant avec au moins un aimant mobile (31, 32) solidaire de ladite manette (3) en vue de déterminer sa position.

7. Module selon la revendication 6, **caractérisé en ce que** la manette de commande (3) est montée sur le boîtier (12) de telle sorte que l'aimant mobile (31,32) soit à l'extérieur du boîtier par rapport au circuit imprimé (10).

## Claims

1. Electronic steering column module for an automotive vehicle comprising a housing (12) accommodating a printed circuit (10), mounted perpendicularly to the steering column (2) and surrounding it completely, and comprising means for measuring the angular position of said column, **characterised in that**:
• the printed circuit board comprises at least four semi-circular spiral coils (13a, 13b, 13'a, 13'b) arranged concentrically to the clearance-hole (4) for the steering column in two concentric groups of two opposing coils, the groups being rotated at 90° relative to one another,
• a ferromagnetic ring (14) comprised of a material with high magnetic permeability and low saturation field placed in contact with the coils,
the assembly working in conjunction with a semi-circular magnet (21) integral with the steering column and placed opposite the ferromagnetic ring (14).

2. Module according to claim 1, **characterised in that** the ferromagnetic ring (14) is held in contact with the coils (13) by clamping between the printed circuit (10) and the housing (12) and by the semi-circular magnet (21) being arranged outside of the housing.

3. Module according to claim 2, **characterised in that** the clamping is obtained by moulding a flange (15) protruding from the housing over the printed circuit.

4. Module according to one of claims 1 to 3, **characterised in that** the printed circuit further comprises at least one circular spiral coil (18) concentric with the preceding ones, associated with a second ferromagnetic ring (19) working in conjunction with a plurality of magnetised sectors (22) regularly spaced around the periphery of the two collars (20, 20') arranged on either side of the coil (18) and of the ring (19), each collar respectively integral with one section (2a, 2b) of the steering column (2), said sections being connected by a torsion bar (2c) crossing the module.

5. Module according to claim 4, **characterised in that** one of the collars (20) also has a semi-circular magnet (21) attached to it.

6. Module according to one of claims 1 to 5, combined with at least one control arm (3) connected to the housing (12) of the module, **characterised in that** the printed circuit further comprises a plurality of position detectors (16, 17) having at least one spiral coil (16a, 17a) of a predetermined shape, associated with a ferromagnetic plate (16b, 17b) of a corresponding shape, being supported on said coil, working in conjunction with at least one mobile magnet (31, 32) integral with said control arm (3) so as to determine its position.

7. Module according to claim 6, **characterised in that** the control arm (3) is mounted on the housing (12) in such a way that the mobile magnet (31, 32) is outside of the housing with respect to the printed circuit (10).

## Patentansprüche

1. Elektronisches Lenksäulenmodul für ein Kraftfahrzeug, umfassend ein Gehäuse (12), das eine gedruckte Schaltung (10) trägt, die senkrecht zur Lenksäule (2) montiert ist und diese vollständig umgibt, und umfassend Mittel zum Messen der Winkelposition der Säule, **dadurch gekennzeichnet, dass**:
- die gedruckte Schaltung mindestens vier halbkreisförmige Spiralspulen (13a, 13b, 13'a, 13'b) umfasst, die konzentrisch zur Durchgangsöffnung (4) der Lenksäule angeordnet sind, in zwei konzentrischen Gruppen zu je zwei gegenüberliegenden Spulen, wobei die Gruppen um 90° versetzt sind.
- ein ferromagnetischer Ring (14) aus Material von großer magnetischer Permeabilität und schwachem Sättigungsfeld in Kontakt mit den Spulen platziert ist,
wobei die Baugruppe mit einem halbkreisförmigen Magneten (21) zusammenwirkt, der mit der Lenksäule verbunden und dem ferromagnetischen Ring (14) gegenüber platziert ist.

2. Modul nach Anspruch 1, **dadurch gekennzeichnet, dass** der ferromagnetische Ring (14) durch Festklemmen zwischen der gedruckten Schaltung (10) und dem Gehäuse (12) in Kontakt mit den Spulen (13) gehalten wird, und dadurch, dass der halbkreisförmige Magnet (21) außerhalb des Gehäuses angeordnet ist.

3. Modul nach Anspruch 2, **dadurch gekennzeichnet, dass** das Festklemmen durch Umklappen eines Bundes (15) erreicht wird, der aus dem Gehäuse hervortritt.

4. Modul nach einem der Ansprüche 1 bis 3, **dadurch gekennzeichnet, dass** die gedruckte Schaltung außerdem mindestens eine kreisförmige Spiralspule (18) umfasst, die zu den vorhergehenden konzentrisch ist, die mit einem zweiten ferromagnetischen Ring (19) verbunden ist, der mit mehreren magnetisierten Abschnitten (22) verbunden ist, die gleichmäßig einander gegenüberliegend am Rand der beiden Aufsätze (20, 20') verteilt und zu beiden Seiten der Spule (18) und des Rings (19) angeordnet sind, wobei jeder Aufsatz jeweils mit einem Abschnitt (2a, 2b) der Lenksäule (2) verbunden ist, wobei die Abschnitte durch einen Torsionsstab (2c) verbunden sind, der das Modul durchdringt.

5. Modul nach Anspruch 4, **dadurch gekennzeichnet, dass** einer der Aufsätze (20) auch den halbkreisförmigen Magneten (21) trägt.

6. Modul nach einem der Ansprüche 1 bis 5, kombiniert mit mindestens einem Bedienhebel (3), der auf dem Gehäuse (12) des Moduls angelenkt ist, **dadurch gekennzeichnet, dass** die gedruckte Schaltung außerdem mehrere Positionssensoren (16, 17) umfasst, die aus mindestens einer Spiralspule (16a, 17a) vorbestimmter Form bestehen, die mit einer ferromagnetischen Platte (16b, 17b) entsprechender Form verbunden ist, die an der Spule anliegt und mit mindestens einem beweglichen Magneten (31, 32) zusammenwirkt, der mit dem Hebel (3) verbunden ist, um seine Position zu bestimmen.

7. Modul nach Anspruch 6, **dadurch gekennzeichnet, dass** der Bedienhebel (3) auf dem Gehäuse (12) so montiert ist, dass der bewegliche Magnet (31, 32) sich im Verhältnis zur gedruckten Schaltung außerhalb des Gehäuses befindet.
